# EUROPÄISCHE PATENTSCHRIFT

(11) **EP 3 287 057 B1**
(45) Veröffentlichungstag und Bekanntmachung des Hinweises auf die Patenterteilung: **17.03.2021**
(21) Anmeldenummer: 17185872.3
(22) Anmeldetag: 11.08.2017
(51) Int. Cl.: A47J 43/07

(54) **VERRIEGELUNGSVORRICHTUNG ZUR AUFNAHME EINER BEARBEITUNGSEINHEIT**
LOCKING DEVICE FOR HOLDING A PROCESSING UNIT
DISPOSITIF DE VERROUILLAGE DESTINÉE À CONTENIR UNE UNITÉ DE TRAITEMENT

(30) Priorität: 26.08.2016 DE 102016216090
(43) Veröffentlichungstag der Anmeldung: 28.02.2018
(73) Patentinhaber: BSH Hausgeräte GmbH, 81739 München (DE)
(72) Erfinder: Kovacec, Bostjan, 1420 Trbovlje (SI); Brecko, Ales, 3000 Celje (SI); Robida, Tomaz, 3341 Smartno ob Dreti (SI)

(56) Entgegenhaltungen:
- EP-A1- 2 404 536
- WO-A1-00/24302
- WO-A1-2016/120021
- DE-C1- 3 225 591
- FR-A1- 2 908 619
- US-B1- 7 318 666

## Beschreibung

### Gebiet der Erfindung

Die Erfindung betrifft eine Verriegelungsvorrichtung zur Aufnahme einer Bearbeitungseinheit, wobei die Bearbeitungseinheit mit der Verriegelungsvorrichtung verbunden ist, gemäß dem Oberbegriff des Anspruchs 1.

### Hintergrund der Erfindung

Die Offenlegungsschrift DE 10 2013 205545 offenbart einen Berarbeitungsaufsatz für eine Küchenmaschine, der eine Gerätekupplung zum Ankoppeln des Bearbeitungsaufsatzes an eine Küchenmaschine aufweist. Ein Mechanismus des Bearbeitungsaufsatzes sorgt dafür, dass das Ankoppeln nur dann möglich ist, wenn ein Deckelelement ein Bechergefäß des Bearbeitungsaufsatzes schließt und zudem am Bechergefäß gegen axialen Verlust gesichert ist.

Die Druckschrift EP 2 404 536 A1 beschreibt einen Behälter mit einer Verriegelungsvorrichtung, in der ein Werkzeughalter gelagert ist. Dabei ist die Verriegelungsvorrichtung derart ausgestaltet, dass sie ein Trennen der Verriegelungsvorrichtung von dem Behälter nur in einer bestimmten Position des Behälters zulässt, und die Trennung der Verriegelungsvorrichtung vom Behälter in einer davon unterschiedlichen Position, insbesondere in einer Position, in der die Küchenmaschine oder das Küchengerät betrieben wird, unterbindet. Dadurch kann ein ungewolltes Lösen der Verriegelungsvorrichtung von einem damit verbundenen Behälter sichergestellt werden.

Es kann hierbei jedoch der Fall eintreten, dass der Benutzer den Einbau einer Werkzeugeinrichtung an das Küchengerät, wie zum Beispiel Messer, Rührer oder Knetbesen, aus Unachtsamkeit vergisst und dennoch den Behälter an das Küchengerät aufsetzt und anschließt. Beim Befüllen des Behälters mit Nahrungsmitteln oder Flüssigkeiten kann dann die Flüssigkeit in das Küchengerät eintreten, das Innere verunreinigen und insbesondere durch den Kontakt mit elektronischen Bauteilen Störungen, insbesondere Kurzschlüsse oder Kriechströme, verursachen und dadurch die Sicherheit des Benutzers gefährden sowie die Küchenmaschine beschädigen.

Die internationale Veröffentlichungsschrift WO 00/24302 A1 offenbart eine Küchenmaschine mit einem nach unten offenen Behälter, einem drehbaren Werkzeug, einem Werkzeugträger und einer Kupplung, mit der das Werkzeug an einen Antrieb der Küchenmaschine angeschlossen werden kann. An dem Träger sind eine Sicherung und eine Sperre angeordnet, die miteinander zusammenwirken. Die Sicherung kann relativ zur Kupplung von einer ersten Stellung, in der die Sicherung das Ankoppeln der Kupplung an den Antrieb verhindert, in eine zweite Stellung, in der dies möglich ist, gebracht werden, wobei die Sperre die Sicherung in der ersten Position festlegt, wenn der Behälter von dem Träger getrennt ist, und die Sicherung freigibt, wenn der Behälter an den Träger angekoppelt ist.

### Der Erfindung zugrundeliegende Aufgabe

Der Erfindung liegt daher die Aufgabe zugrunde, eine Verriegelungsvorrichtung zur Aufnahme einer Bearbeitungseinheit in einem Behälter bereitzustellen, welche die Sicherheit für den Benutzer sowie die Lebensdauer des Küchengerätes erhöht.

### Erfindungsgemäße Lösung

Diese Aufgabe wird durch eine Verriegelungsvorrichtung zur Aufnahme einer Bearbeitungseinheit in einem Behälter gemäß dem Anspruch 1 gelöst.

Vorteilhafte Ausgestaltungen sind der nachfolgenden Beschreibung sowie den Figuren zu entnehmen. Die Bezugszeichen in sämtlichen Ansprüchen haben keine einschränkende Wirkung, sondern sollen lediglich deren Lesbarkeit verbessern. Richtungsangaben wie "oben", "unten", "Oberseite" und "Unterseite" orientieren sich an der typischen Positionierung der jeweiligen Komponente in der Einbaulage. Dabei wird davon ausgegangen, dass sich unterhalb eines von oben befüllbaren Behälters die Verriegelungsvorrichtung befindet, welche ihrerseits oberhalb eines Antriebs oder einer sie aufnehmenden Halterung des Gehäuses des Küchengerätes angeordnet ist. "Axial" bedeutet parallel zu der oder den Rotationsachsen des Mischwerkzeugs, "radial" bezeichnet dazu lotrecht verlaufende Richtungen.

Die erfindungsgemäße Verriegelungsvorrichtung weist einen Kupplungsbereich zum Ankuppeln an die Kupplungsstelle eines Küchengeräts auf. Der bevorzugte Kupplungsbereich ist mit Bajonettelementen ausgestattet, die mit korrespondierenden Bajonettelementen an einer Kupplungsstelle des Küchengeräts zusammenwirken können, um die Verriegelungsvorrichtung an das Küchengerät anzukoppeln. Außerdem weist die Verriegelungsvorrichtung mindestens ein Sicherheitselement auf, das in einer ersten Stellung ein Ankoppeln der Verriegelungsvorrichtung an die Kupplungsstelle verhindert und in einer zweiten Stellung erlaubt. Die Verriegelungsvorrichtung kann eine Bearbeitungseinheit aufnehmen. Eine Bearbeitungseinheit im Sinne der vorliegenden Erfindung umfasst ein Werkzeug zum Bearbeiten eines Inhalts des Behälters. Als Werkzeuge kommen insbesondere scharfe oder stumpfe Messer in Betracht, die dem Zerkleinern zumindest von Teilen des Inhalts des Behälters dienen. Aber auch andere Werkzeuge können als Werkzeug der Arbeitseinheit verwendet werden. Das Sicherheitselement kann die erste Stellung bei fehlender Bearbeitungseinheit und die zweite Stellung bei aufgenommener Bearbeitungseinheit einnehmen.

Durch die Erfindung ist erreichbar, dass die Verriegelungseinrichtung nur bei aufgenommener Bearbeitungseinheit an das Küchengerät angekoppelt werden kann. Insbesondere, wenn die Verriegelungsvorrichtung zur Befestigung eines Behälters an das Küchengerät vorgesehen ist, kann die Gefahr einer unsachgemäßen Befestigung des Behälters an der Verriegelungsvorrichtung, nämlich ohne in der Verriegelungseinrichtung vorliegende Bearbeitungseinheit, verringert werden. Somit ist es kaum noch möglich, dass Flüssigkeiten oder andere Substanzen aus dem Behälter in das Innere des Küchengeräts eintreten und Störungen verursachen, da diesen Materialien der Durchtritt durch die Bearbeitungseinheit verwehrt wird. Der Innenbereich des Küchengeräts und insbesondere die darin verbauten elektronischen Elemente können auf diese Weise vor dem Kontakt mit Flüssigkeiten geschützt und die Funktionsfähigkeit des Küchengerätes dadurch erhalten werden. Insbesondere wird die Gefahr für das Auftreten von Kurzschlüssen, Kriechströmen oder anderen unerwünschten elektrischen Schadeffekten reduziert, welche die Gesundheit des Benutzers gefährden würden. Dadurch kann die Sicherheit für den Benutzer erhöht und/oder die Lebensdauer des Küchengerätes verlängert werden. Der Aufbau der erfindungsgemäßen Verriegelungsvorrichtung kann dabei durch eine robuste Konstruktion erreicht werden, welche nur eine geringe Anzahl von Elementen erfordert und einfach zusammenzusetzen ist.

### Bevorzugte Ausgestaltung der Erfindung

Vorteilhafte Ausführungsformen und Weiterbildungen, welche einzeln oder in Kombination miteinander eingesetzt werden können, sind Gegenstand der abhängigen Ansprüche und werden nachfolgend beschrieben.

Gemäß der Erfindung ist ein Behälter an die Verriegelungsvorrichtung ankoppelbar. Der bevorzugte Behälter ist ein Mixbecher, vorzugsweise aus einem transparenten Material, z. B. Glas oder transparentem Kunststoff, oder eine Rührschüssel, vorzugsweise aus Kunststoff. Das Werkzeug der Bearbeitungseinheit greift bei angekoppeltem Behälter vorzugsweise in den Behälter ein, um einen Inhalt des Behälters bearbeiten, z. B. zerkleinern oder durchmischen zu können. Bevorzugt ist ein Bajonettmechanismus zum Ankoppeln der Verriegelungsvorrichtung an den Behälter vorgesehen. Der Bajonettmechanismus ist ein in der Haushaltsgerätetechnik bewährter und robuster Verschlussmechanismus, der sich einfach intuitiv bedienen lässt, und größeren mechanischen Belastungen, wie sie bei Mix-, Knet- und Rührvorgängen mit hoher Drehzahl auftreten, standhält. Er erfordert nur eine geringe Anzahl von Bauteilen und ist daher wenig störanfällig, langlebig und wartungsfreundlich. Alternativ zu einem Bajonettmechanismus kann auch ein Gewinde oder ein Schraubverschluss verwendet werden.

Die erfindungsgemäße Verriegelungsvorrichtung weist mindestens ein Arretierelement auf, das bei nicht an die Kupplungsstelle angekuppelter Verriegelungsvorrichtung eine Stellung einnehmen kann, in der der Behälter von der Verriegelungseinrichtung lösbar ist, und bei an die Kupplungsstelle angekuppelter Verriegelungsvorrichtung eine Stellung einnehmen kann, in der der Behälter nicht von der Verriegelungseinrichtung lösbar ist, Das bevorzugte Arretierelement greift in eine korrspondierende Kerbe des Behälters ein. Vorzugsweise sind mindestens zwei Arretierelemente vorgesehen. Vorzugsweise sind mindestens zwei Kerben vorgesehen.

Das bevorzugte Küchengerät ist eine Küchenmaschine, z. B. eine Standküchenmaschine. Vorzugsweise kann das Küchengerät eine in die Verriegelungseinrichtung aufgenommene Bearbeitungseinheit antreiben, vorzugsweise drehend, wenn in die Verriegelungseinrichtung an die Kupplungsstelle des Küchengeräts angekuppelt ist. Zu diesem Zweck ist das Küchengerät ist vorzugsweise mit einem Motor, in der Regel einem Elektromotor, ausgestattet.

Als Sicherheitselemente sind mechanische oder elektromechanische Komponenten beliebiger Form, insbesondere mit einer einfachen Geometrie, wie Stifte, Riegel, Kugeln oder Ringe sowie eine Kombination von Elementen unterschiedlicher Ausgestaltungen möglich. Das Sicherheitselement kann dabei durch eine mechanische oder elektromagnetische Krafteinwirkung bewegt werden. Bevorzugt bewegt sich das Sicherheitselement in einer Schiene oder in einem Kanal, um eine definierte Bewegungsrichtung und -verlauf zu gewährleisten. Durch die Bewegung des Sicherheitselementes in einer Führungsschiene wird ein definierter Übergang zwischen der ersten und der zweiten Stellung bewirkt. Dabei wird durch den ersten Zustand des Sicherheitselementes ein funktionstüchtiger Zustand des Küchengerätes zur Erhöhung der Sicherheit des Benutzers festgelegt.

Vorteilhafterweise ist das Sicherheitselement drehbar in der Verriegelungsvorrichtung angeordnet, und die Verdrehung des Sicherheitselementes relativ zur Verriegelungsvorrichtung definiert die erste und die zweite Stellung der Verriegelungsvorrichtung. Der Übergang zwischen dem ersten und dem zweiten Zustand der Verriegelungsvorrichtung kann durch eine axiale Verdrehung des Sicherheitselementes relativ zur Verriegelungsvorrichtung erfolgen. Die Drehachse des Sicherheitselementes ist dabei bevorzugt die Rotationsachse des Werkzeugs der Bearbeitungseinheit. Auf der Drehachse kann das Sicherheitselement zuverlässig fixiert werden. Zudem entspricht die Rotationssymmetrie in angenäherter Form der Symmetrie der Bearbeitungseinheit sowie der Verriegelungsvorrichtung, was unter mechanischen Aspekten, insbesondere zur Vermeidung von Unwuchten, vorteilhaft ist. Darüber hinaus kann durch eine genaue Bestimmung der axialen Verdrehung des Sicherheitselementes der Übergang zwischen dem ersten und dem zweiten Zustand definiert eingestellt werden.

Bevorzugt weist die Verriegelungsvorrichtung ein elastisches Rückstellelement auf, welches das Sicherheitselement in einer Rückstellposition hält, in der ein Ankoppeln der Verriegelungsvorrichtung an die Kupplungsstelle des Küchengeräts verhindert wird. Somit wird sichergestellt, dass das Sicherheitselement in einer Ruheposition, das heißt ohne eine eingesetzte Bearbeitungseinheit, in jedem Fall in einer Stellung gehalten wird, welche das Ankuppeln der Verriegelungsvorrichtung an das Küchengerät verhindert. Durch das elastische Rückstellelement ist es auf einfache Weise möglich, ohne einen großen Kraftaufwand das Sicherheitselement aus dem zweiten Zustand in den ersten Zustand zu bringen, und bei einer Herausnahme der Bearbeitungseinheit reversibel wieder in den ursprünglichen zweiten Zustand zurückzuversetzen, ohne dass dies einer zusätzlichen mechanischen Einwirkung auf das Sicherheitselement bedürfen würde. Dies kann die Handhabung der Verriegelungsvorrichtung erheblich vereinfachen.

Es ist zweckmäßig, wenn das elastische Rückstellelement als eine Torsionsfeder ausgebildet ist. Eine Torsionsfeder weist die gleiche Symmetrie wie das Sicherheitselement auf, sodass dadurch eine gleichmäßige Einwirkung von dessen Federkraft auf das Sicherheitselementes erreicht wird. Ferner nimmt bei einer Torsionsfeder die Rückstellkraft mit zunehmender Auslenkung zu, und zeigt dem Benutzer auf intuitive Art beim Einsetzen der Bearbeitungseinheit in die Verriegelungsvorrichtung den Grad der Verdrehung des Sicherheitselementes und der damit verbundenen Bearbeitungseinheit an. Neben einer Torsionsfeder können alternativ auch andere elastische Rückstellelemente wie Gummizüge, Spiralfedern oder Blattfedern verwendet werden.

In einer bevorzugten Ausführungsform weist das Sicherheitselement zumindest ein Eingriffselement zum Eingriff in die Bearbeitungseinheit auf. Auf diese Weise wird eine direkte Wechselwirkung zwischen dem Sicherheitselement und der Bearbeitungseinheit erreicht, sodass durch einsetzen der Bearbeitungseinheit in die Verreigelungsvorrichtung, vorzugsweise speziell durch Aufsetzen und Verdrehen der Bearbeitungseinheit relativ zum Sicherheitselement, einen Übergang der Verriegelungsvorrichtung von einem Zustand, in dem ein Ankoppeln der Verriegelungsvorrichtung an die Kupplungsstelle verhindert wird, in einen Zustand, in dem ein Ankoppeln der Verriegelungsvorrichtung an die Kupplungsstelle möglich ist, stattfindet. Das Eingriffselement kann ferner dazu dienen, dem Benutzer anzuzeigen, ob die Bearbeitungseinheit auf eine ordnungsgemäße Art und Weise, d .h. insbesondere mit korrekter Ausrichtung und Orientierung, auf das Sicherheitselement und in die Verriegelungsvorrichtung eingesetzt ist. Die Eingriffselemente können unterschiedliche Geometrien, Konturen und Oberflächenstrukturen aufweisen, insbesondere eine Haken-, Zapfen- oder Dornenform, wobei die Bearbeitungseinheit zur Aufnahme des Eingriffselementes bevorzugt Einkerbungen mit einem hierzu komplementären Profil aufweist.

Bevorzugt ist das Sicherheitselement im Wesentlichen ringförmig ausgebildet, wobei sich zumindest das eine Eingriffselement im Wesentlichen senkrecht zur Ringebene des Sicherheitselementes erstreckt. Auf diese Weise kann ein optimaler Eingriff des Eingriffselementes in die entsprechende Ausnehmung einer aufgesetzten Bearbeitungseinheit erreicht werden. Das Aufsetzen der Bearbeitungseinheit auf das Sicherheitselement ist vorzugsweise nur in einer definierten Ausrichtung der Bearbeitungseinheit zum Sicherheitselement erlaubt, wodurch ein korrektes Einsetzen der Bearbeitungseinheit in die Verriegelungsvorrichtung gewährleistet wird. Die Ringgeometrie des Sicherheitselements harmoniert dabei vorteilhaft mit der axialen Drehsymmetrie der Bewegung des Sicherheitselementes innerhalb der Verriegelungsvorrichtung und entspricht im Wesentlichen der von einem Benutzer intuitiv erwarteten Art das Sicherheitselement zu bewegen.

Vorteilhafterweise ist das Sicherheitselement mit mindestens einem, vorzugsweise mindestens zwei Rasthaken ausgestattet, in den die Bearbeitungseinheit einrasten kann, wenn sie in die Verriegelungsvorrichtung aufgenommen wird. Vorzugsweise sind Rasthaken und die Stelle(n) der Bearbeitungseinheit, an die die Rasthakenangreifen, so ausgebildet, dass sich die Bearbeitungseinheit mit einer vorbestimmten Kraft wieder von dem Sicherheitselement, und dadurch vorzugsweise auch von der Verriegelungsvorrichtung, lösen lässt. Diese Kraft ist vorzugsweise kleiner als 50 Newton (N), besonders vorzugsweise kleiner als 20 N, besonders vorzugsweise kleiner als 10 N. Sie ist vorzugsweise größer als 0,3 N, besonders vorzugsweise größer als 1 N, besonders vorzugsweise größer als 2 N, z. B. 5 N.

Die bevorzugte Bearbeitungseinheit ist mit einem Sicherheitsring ausgestattet, der in an die Kupplungsstelle angekoppeltem Zustand der Verriegelungsvorrichtung, den Bereich, in dem eine Welle des Werkzeugs der Bearbeitungseinheit an eine Welle der Küchenmaschine angekoppelt ist, abdeckt. Der bevorzugte Sicherheitsring ist mit einem elastischen Element, z. B. einer Schraubenfeder, gegen ein Teil der Bearbeitungseinheit, an das die Rasthaken des Sicherheitselements angreifen können, vorgespannt. Das elastische Element ist so ausgebildet und angeordnet, dass es bei sachgemäßem Ankoppeln der Verriegelungsvorrichtung an die Kupplungsstelle des Küchengeräts keine so große Kraft auf die Teile der Bearbeitungseinheit, an das die Rasthaken des Sicherheitselements angreifen können, ausübt, dass sich die Bearbeitungseinheit von dem Sicherheitselement, und dadurch vorzugsweise auch von der Verriegelungsvorrichtung, löst.

Die bevorzugte Verriegelungsvorrichtung weist mindestens ein Verriegelungselement auf, das von dem Sicherheitselement in einer Verriegelungsstellung arretiert wird, wenn sich das Sicherheitselement in der ersten Stellung befindet. Vorzugsweise ragt das Verriegelungselement in der Verriegelungsstellung so in den Bereich der Verriegelungsvorrichtung, in dem diese an die Kupplungsstelle ankoppeln kann, ein, dass ein ankoppeln nicht möglich ist. Das bevorzugte Verriegelungselement ist nicht in der Verriegelungsstellung arretiert, wenn sich das Sicherheitselement in der zweiten Stellung befindet. Vorzugsweise kann das Verriegelungselement in diesem Fall aus der Verriegelungsstellung ausweichen, besonders vorzugsweise von einem Teil der Kupplungsstelle verschoben werden, sodass die Verriegelungsvorrichtung an die Kupplungsstelle ankoppeln kann. Das bevorzugte Verriegelungselement ist mit einem elastischen Element, z. B. einer Schraubenfeder, in die Verriegelungsstellung vorgespannt. Dadurch ist vorteilhafterweise erreichbar, dass sich das Verriegelungselement bei nicht an die Kupplungsstelle angekoppeltem Zustand der Verriegelungsvorrichtung in der Verriegelungsstellung befindet und bei einem Entnehmen der Bearbeitungseinheit in dieser Stellung arretiert werden kann. Eine bevorzugte Verriegelungsvorrichtung weist mindestens zwei Arretierelemente auf.

Vorzugsweise ist das Arretierelement an dem Verriegelungselement angeordnet, und zwar besonders vorzugsweise so, dass es den Behälter nicht arretiert, wenn sich das Verriegelungselement in der Verriegelungsstellung befindet. Dadurch ist vorteilhafterweise erreichbar, dass der Behälter von der Verriegelungsvorrichtung gelöst werden kann, wenn die Verriegelungsvorrichtung nicht an der Kupplungsstelle angekoppelt ist, Vorzugsweise arretiert das Arretierelement den Behälter, wenn sich das Verriegelungselement nicht in der Verriegelungsstellung befindet. Dadurch ist vorteilhafterweise erreichbar, dass der Behälter nicht von der Verriegelungsvorrichtung gelöst werden kann, wenn die Verriegelungsvorrichtung an der Kupplungsstelle angekoppelt ist,

### Kurzbeschreibung der Zeichnungen

Weitere vorteilhafte Ausgestaltungen der erfindungsgemäßen Verriegelungsvorrichtung werden nachfolgend anhand der in den Zeichnungen dargestellten Ausführungsbeispiele, auf welche die Erfindung jedoch nicht beschränkt ist, beschrieben.
- Figur 1: zeigt einen Behälter, eine Bearbeitungseinheit sowie eine erfindungsgemäße Verriegelungsvorrichtung in einer linearen Anordnung;
- Figur 2: zeigt eine perspektivische Explosionszeichnung einer bevorzugten Ausführungsform der erfindungsgemäßen Verriegelungsvorrichtung;
- Figur 3: zeigt eine Seitenansicht, eine Querschnittsansicht in radialer Richtung der Ebene A-A sowie eine Querschnittsansicht der Ebene B-B in axialer Richtung der erfindungsgemäßen Verriegelungsvorrichtung im verriegelten Zustand ohne eingesetzte Bearbeitungseinheit;
- Figur 4: zeigt eine Seitenansicht, eine Querschnittsansicht der Ebene C-C in radialer Richtung sowie eine Querschnittsansicht der Ebene D-D in axialer Richtung der erfindungsgemäßen Verriegelungsvorrichtung im entriegelten Zustand mit eingesetzter Bearbeitungseinheit;
- Figur 5: zeigt eine Schnittansicht der Ebene E-E einer erfindungsgemäßen Verriegelungsvorrichtung im entriegelten Zustand mit eingesetzter Bearbeitungseinheit sowie eine Aufsicht auf diese Kombination;
- Figur 6: zeigt die Verriegelungsvorrichtung mit vorschriftsmäßig eingesetzter Bearbeitungseinheit in perspektivischer Ansicht; und
- Figur 7: zeigt die Komponente eines Bajonettverschlusses an dem Küchengerät, das mit einer korrespondierenden Komponente des Bajonettverschlusses an der Verriegelungseinrichtung zusammenwirkt.

### Ausführliche Beschreibung anhand eines Ausführungsbeispiels

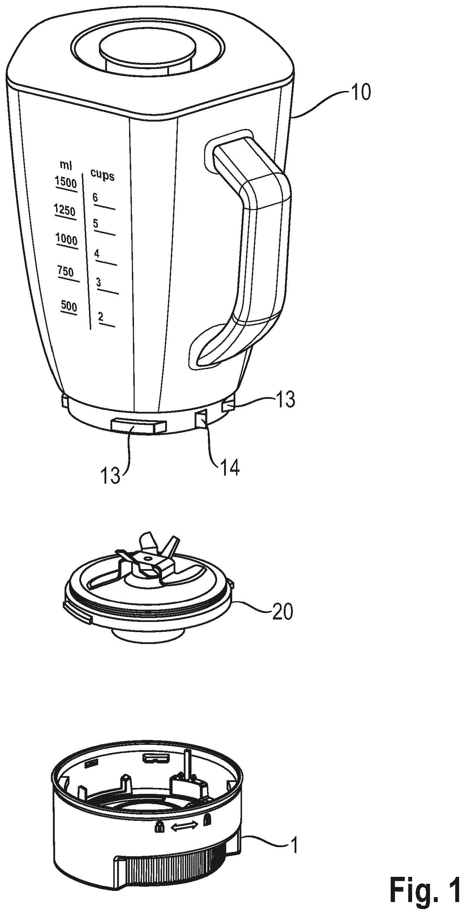

Figur 1 zeigt eine lineare Anordnung eines Behälters 10, darunter eine Bearbeitungseinheit 20 sowie abschließend eine Verriegelungsvorrichtung 1 in einer bevorzugten Ausführungsform. Die Bearbeitungseinheit 20 wird in die erfindungsgemäße Verriegelungsvorrichtung 1 eingesetzt und mit dieser verdreht. Der Behälter 10 wird auf die Verriegelungsvorrichtung 1 aufgesetzt und über einen Bajonettverschluss mit dieser verbunden. Die Bearbeitungseinheit 20 ist mit einem Werkzeug, hier ein vierschneidiges Messer, ausgestattet, das in der erfindungsgemäßen Verriegelungsvorrichtung 1 frei rotieren kann. Die mit der Bearbeitungseinheit 20 und dem Behälter 10 verbundene erfindungsgemäße Verriegelungsvorrichtung 1 kann mit einem Kupplungsbereich 9 auf die Kupplungsstell eines Küchengeräts (nicht gezeigt) aufgesetzt und die Bearbeitungseinheit 20 über eine in dem Küchengerät vorhandene Antriebseinheit (ebenfalls nicht gezeigt) angetrieben werden. Zu diesem Zweck weist die erfindungsgemäße Verriegelungsvorrichtung 1 eine zentrale Öffnung auf, um einen Durchtritt einer Antriebswelle zu ermöglichen.

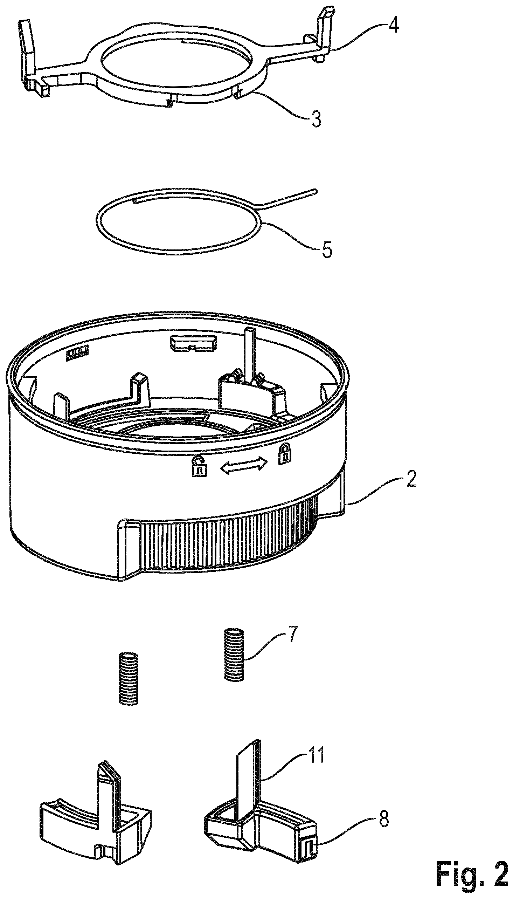

Figur 2 zeigt eine perspektivische Explosionszeichnung einer bevorzugten Ausführungsform der erfindungsgemäßen Verriegelungsvorrichtung 1, um eine Bearbeitungseinheit 20 sowie einen Behälter 10 daran zu befestigen. In der Verriegelungsvorrichtung 1 ist ein Sicherheitselement 3 mit diametral gegenüberliegenden Eingriffselementen 4 angeordnet, wobei das Sicherheitselement 3 über ein Rückstellelement 5, welche als Torsionsfeder ausgebildet ist, in dem Gehäuse 2 gelagert ist und durch das Rückstellelement 5 in einer definierten Rückstellposition gehalten wird. Das Sicherheitselement 3 weist in seinem zentralen Bereich eine ringförmige Geometrie auf, wobei die beiden Eingriffselemente 4 senkrecht nach oben zur Ringebene in Hakenform ausgerichtet sind. Diese Eingriffselemente 4 dienen zum rastenden Eingriff in die Bearbeitungseinheit 20 (nicht gezeigt). Eine eingerastete Bearbeitungseinheit 20 kann mit einer Kraft von einigen Newton aus der Verrastung gelöst werden.

Zudem sind zwei Verriegelungselemente 8 vorgesehen, die durch Kompressionsfedern 7 in Form von Schraubenfedern in eine Verriegelungsstellung vorgespannt sind. Die Verriegelungsstellung ist eine Stellung, in der die Verriegelungselemente in den Kupplungsbereich 9 der Verriegelungsvorrichtung eingreifen.

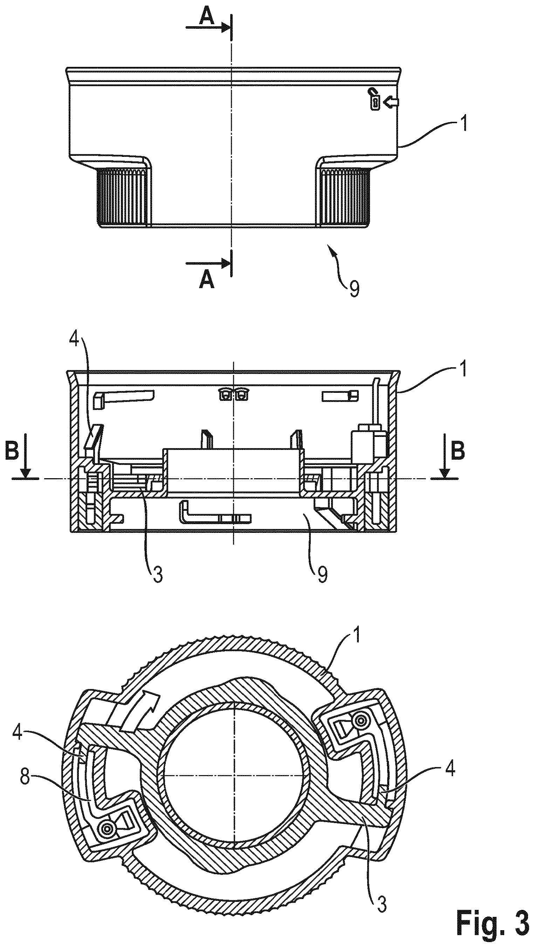

Figur 3 zeigt zwei Querschnittsansichten der erfindungsgemäßen Verriegelungsvorrichtung 1 entlang der Ebene A-A sowie der Ebene B-B. Die Verriegelungsvorrichtung 1 befindet sich dabei in einem Zustand ohne eine eingesetzte Bearbeitungseinheit 20. Das Sicherheitselement 3 mit einer ringförmigen Geometrie befindet sich zentral innerhalb der Verriegelungsvorrichtung 1 und weist eine kreisförmige Öffnung auf. Das Sicherheitselement 3 ist durch das Rückstellelement 5 in einer ersten Stellung vorgespannt, die das Ankoppeln der Verriegelungsvorrichtung 1 an die Kupplungsstelle 30 verhindert. Zu diesem Zweck arretiert das Sicherheitselement 3 die Verriegelungselemente 8 in ihrer Verriegelungsstellung, die Sie durch die Vorspannung der Kompressionsfedern 7 eingenommen haben. Die Arretierung geschieht dadurch, dass Abschnitte des Sicherheitselements den Verriegelungselementen 8 den Weg entgegen der Vorspannung der Kompressionsfeder 7 nach oben im Weg sind. Dadurch sind die Verriegelungselemente selbst der Kupplungsstelle 30 im Weg, sodass ein Ankuppeln des Kupplungsbereichs der Verriegelungsvorrichtung verhindert wird. Dies ist zweckmäßig, da keine Bearbeitungseinheit 20 in der Verriegelungsvorrichtung 1 installiert ist, und somit ein Ankoppeln an das Küchengerät, ein Aufsetzen des Behälters 10 und dessen Befüllung mit Nahrungsmitteln oder Flüssigkeiten ein unerwünschtes Eintreten dieser Materialien in das darunter liegende Küchengerät (nicht gezeigt) nicht verhindert wird.

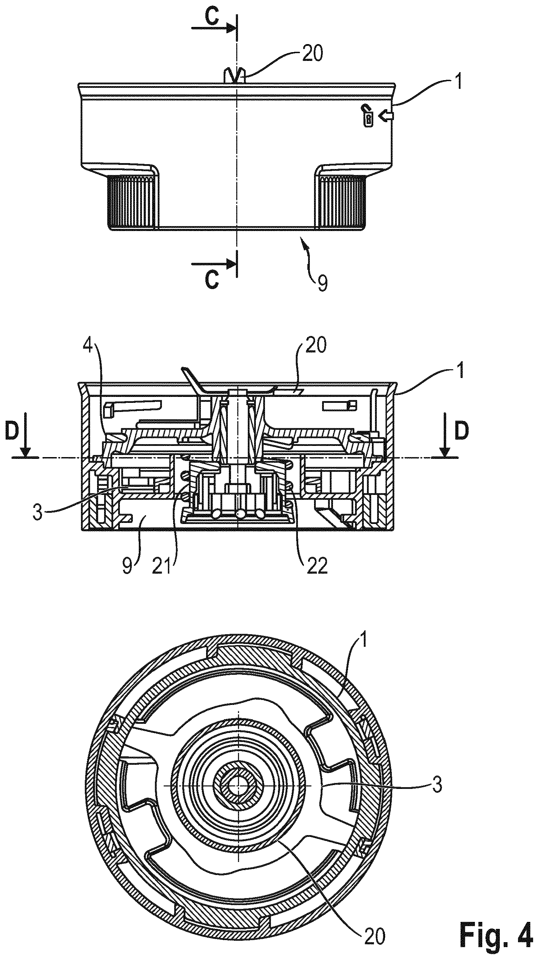

Figur 4 zeigt zwei Querschnittsansichten der erfindungsgemäßen Verriegelungsvorrichtung 1 in den Ebenen C-C sowie D-D. Die Verriegelungsvorrichtung 1 befindet sich dabei in einem Zustand mit eingesetzter Bearbeitungseinheit 20. Die Bearbeitungseinheit 20 ist auf das Sicherheitselement 3 aufgesetzt, und durch die erfolgte Rotation des Sicherheitselementes 3 im Uhrzeigersinn ausgehend von dem in Figur 3 gezeigten verriegelten Zustand können die beiden Eingriffselemente 4 aus den Verriegelungselementen 8 heraustreten und bewirken den Übergang des Sicherheitselements 3 in eine zweite Stellung, die ein Ankoppeln der Verriegelungsvorrichtung 1 an die Kupplungsstelle 30 erlaubt. Ein Hindurchtreten des Inhalts des Behälters 10 in das Küchengerät wird in diesem Fall durch das Vorliegen der Bearbeitungseinheit 20 verhindert. Durch die Rotation des Sicherheitselements 3 versperren die Abschnitte des Sicherheitselements 3, die den Verriegelungselementen 8 zuvor im Weg waren, diesen nun nicht mehr den Weg. Dadurch sind die Verriegelungselemente selbst der Kupplungsstelle 30 im Weg, sodass diese nun beim Ankopplen der Verriegelungsvorrichtung an die Kupplungsstelle 30 durch den Kontakt mit der Kupplungsstelle entgegen der Vorspannung der Kompressionsfeder 7 aus dem Kupplungsbereich nach oben bewegt werden können. Dabei werden gleichzeitig zwei Arretierelemente, die jeweils an den Verriegelungselementen angeordnet sind, mit nach oben bewegt und greifen in korrespondierende Kerben 14 in dem Behälter 10 ein, um zu verhindern, dass der Behälter von der Verriegelungsvorrichtung gelöst werden kann, wenn die Verriegelungsvorrichtung an die Kupplungsstelle des Küchengeräts angekoppelt ist.

In Figur 4 ist auch der Sicherheitsring 21 erkennbar, der in an die Kupplungsstelle angekoppeltem Zustand der Verriegelungsvorrichtung 1, den Bereich, in dem eine Welle des Werkzeugs der Bearbeitungseinheit 20 an eine Welle der Küchenmaschine angekoppelt ist, abdeckt. Der Sicherheitsring 21 ist mit einer Schraubenfeder 22 gegen einen tellerförmigen Teil der Bearbeitungseinheit, an das die hakenförmigen Eingriffselemente 4 des Sicherheitselements 2 angreifen können, vorgespannt, allerdings nicht so stark, dass sich bei sachgemäßem Ankoppeln der Verriegelungsvorrichtung an die Kupplungsstelle des Küchengeräts die Bearbeitungseinheit von dem Sicherheitselement löst.

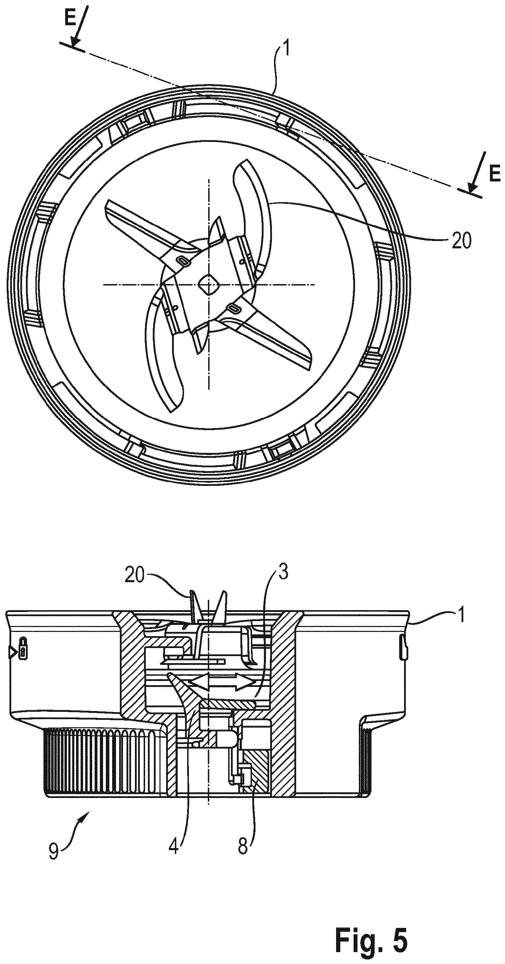

Figur 5 zeigt eine Schnittansicht der erfindungsgemäßen Verriegelungsvorrichtung 1 mit eingesetzter Bearbeitungseinheit 20 entlang der Ebene E-E in radialer Richtung sowie eine Aufsicht. Die Bearbeitungseinheit 20 ist dabei auf dem Sicherheitselement 3 angeordnet und verschließt die zentrale Durchtrittsöffnung der Verriegelungsvorrichtung 1 und verhindert ein Eintreten von Flüssigkeit aus dem Behälter 10 (nicht gezeigt) in das Küchengerät (ebenfalls nicht gezeigt). In der dargestellten zweiten Stellung des Sicherheitselements 3 ist das Verriegelungselement 8 nicht durch das Sicherheitselement arretiert, jedoch befindet es sich, weil nicht an die Kupplungsstelle 30 des Küchengeräts angekoppelt, aufgrund der Vorspannung der Kompressionsfeder 8 in der Verriegelungsstellung. Bei Entnahme der Bearbeitungseinheit wird die Sicherheitseinheit 3 durch die Kraft des Rückstellelements 5 in die rechte Richtung des Doppelpfeils in die erste Stellung, die das Ankoppeln verhindert, verdreht.

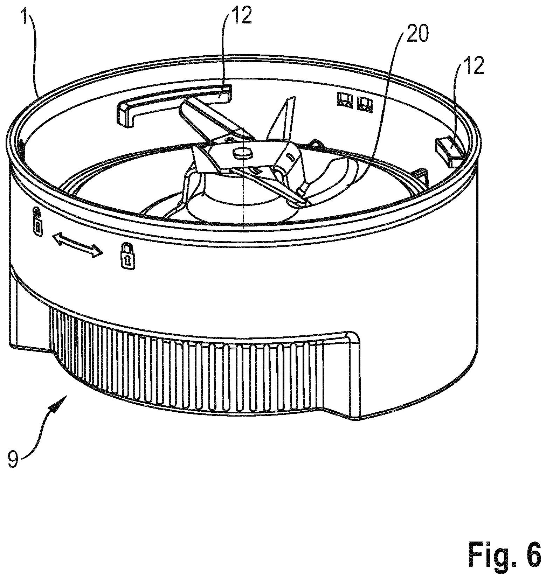

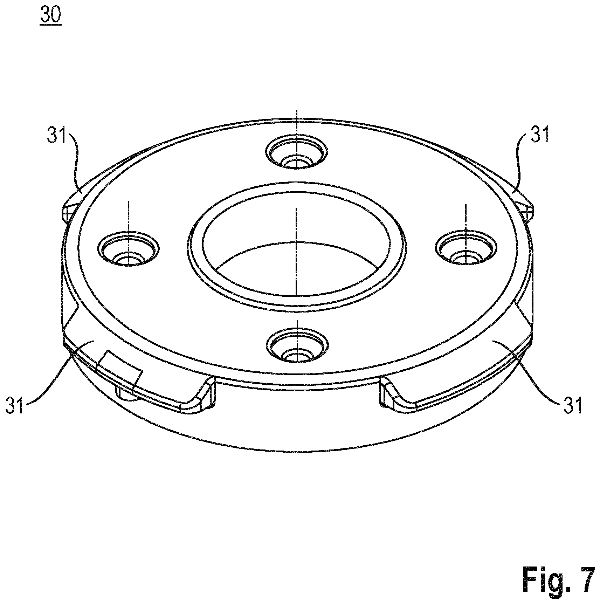

Die Elemente 12 des Bajonettverschlusses, mit dem der Behälter 10 an der Verriegelungsvorrichtung 1 befestigt wird, sind in Figur 6 gut zu sehen. Der Behälter 10 ist, wie in Figur 1 zu sehen, mit korrespondierenden Elementen 13 des Bajonettverschlusses ausgestattet. Die Figur zeigt die Verriegelungsvorrichtung 1 mit vorschriftsmäßig eingesetzter Bearbeitungseinheit 20. Im Kupplungsbereich 9 sind ebenfalls (nicht dargestellte) Elemente eines Bajonettverschlusses vorgesehen, die mit den Elementen 31 des Bajonettverschlusses der in Figur 7 dargestellten Kupplungsstelle 30 zusammenwirken, um die Verriegelungsvorrichtung 1 an die Kupplungsstelle 30 anzukoppeln.

### Bezugszeichenliste

- 1: Verriegelungsvorrichtung
- 2: Gehäuse
- 3: Sicherheitselement
- 4: Eingriffselement
- 5: Rückstellelement
- 7: Kompressionsfeder
- 8: Verriegelungselement
- 9: Kupplungsbereich
- 10: Behälter
- 11: Arretierelement
- 12: Elemente des Bajonettverschlusses für den Behälter 10
- 13: Elemente des Bajonettverschlusses am Behälter 10
- 14: Kerben
- 20: Bearbeitungseinheit
- 21: Sicherheitsring
- 22: Schraubenfeder
- 30: Kupplungsstelle
- 31: Elemente des Bajonettverschlusses der Kupplungsstelle

## Patentansprüche

1. Verriegelungsvorrichtung (1) mit einem Kupplungsbereich (9) zum Ankuppeln an die Kupplungsstelle (30) eines Küchengeräts, wobei die Verriegelungsvorrichtung (1) ein Sicherheitselement (3) umfasst, das in einer ersten Stellung ein Ankoppeln der Verriegelungsvorrichtung (1) an die Kupplungsstelle (30) verhindert und in einer zweiten Stellung erlaubt, wobei die Verriegelungsvorrichtung (1) eine Bearbeitungseinheit (20) mit einem Werkzeug zum Bearbeiten eines Inhalts eines Behälters (10) aufnehmen kann und das Sicherheitselement (3) die erste Stellung bei fehlender Bearbeitungseinheit (20) und die zweite Stellung bei aufgenommener Bearbeitungseinheit (20) einnimmt, und ein Behälter (10) an die Verriegelungsvorrichtung (1) ankoppelbar ist, **dadurch gekennzeichnet, dass** die Verriegelungsvorrichtung mindestens ein Arretierelement (11) aufweist, das bei nicht an die Kupplungsstelle (30) angekuppelter Verriegelungsvorrichtung eine Stellung einnehmen kann, in der der Behälter (10) von der Verriegelungseinrichtung (1) lösbar ist, und bei an die Kupplungsstelle (30) angekuppelter Verriegelungsvorrichtung eine Stellung einnehmen kann, in der der Behälter (10) von der Verriegelungseinrichtung (1) nicht lösbar ist.

2. Verriegelungsvorrichtung (1) nach einem der vorherigen Ansprüche, **dadurch gekennzeichnet, dass** die Verriegelungsvorrichtung (1) ein bewegbares Sicherheitselement (3) aufweist, wobei die Stellung des Sicherheitselementes (3) darüber bestimmt, ob ein Verriegelungselement der Verriegelungsvorrichtung (1) von der ersten in die zweite Stellung bewegt werden kann, dergestalt, dass das Verriegelungselement von dem Sicherheitselementes (3) arretierbar ist.

3. Verriegelungsvorrichtung (1) nach Anspruch 2, **dadurch gekennzeichnet, dass** das Sicherheitselement (3) drehbar in der Verriegelungsvorrichtung (1) angeordnet ist, und die Verdrehung des Sicherheitselementes (3) die erste und die zweite Stellung der Verriegelungsvorrichtung (1) definiert.

4. Verriegelungsvorrichtung (1) nach Anspruch 2 oder 3, **dadurch gekennzeichnet, dass** die Verriegelungsvorrichtung (1) ein elastisches Rückstellelement (5) aufweist, welches das Sicherheitselement (3) in einer Rückstellposition hält, wodurch die erste Stellung der Verriegelungsvorrichtung (1) definiert ist.

5. Verriegelungsvorrichtung (1) nach Anspruch 4, **dadurch gekennzeichnet, dass** das elastische Rückstellelement (5) als eine Torsionsfeder ausgebildet ist.

6. Verriegelungsvorrichtung (1) nach einem der Ansprüche 2 bis 5, **dadurch gekennzeichnet, dass** das Sicherheitselement (3) zumindest ein Eingriffselement (4) zum Eingriff in die Bearbeitungseinheit (20) aufweist.

7. Verriegelungsvorrichtung (1) nach einem der Ansprüche 2 bis 6, **dadurch gekennzeichnet, dass** das Sicherheitselement (3) im Wesentlichen ringförmig ausgebildet ist, und das zumindest eine Eingriffselement (4) sich im Wesentlichen senkrecht zur Ringebene erstreckt.

8. Verriegelungsvorrichtung (1) nach einem der vorherigen Ansprüche, **dadurch gekennzeichnet, dass** die Verriegelungsvorrichtung (1) mindestens ein Verriegelungselement (8) aufweist, das von dem Sicherheitselement (3) in einer Verriegelungsstellung arretiert wird, wenn sich das Sicherheitselement (3) in der ersten Stellung befindet.

## Claims

1. Latching apparatus (1) with a coupling region (9) for coupling to the coupling point (30) of a kitchen appliance, wherein the latching apparatus (1) comprises a safety element (3) that, in a first position, prevents a coupling of the latching apparatus (1) to the coupling point (30) and, in a second position, permits it, wherein the latching apparatus (1) is able to accommodate a processing unit (20) with a tool for processing the contents of a container (10) and the safety element (3) assumes the first position in the absence of a processing unit (20) and the second position when a processing unit (20) is being accommodated, and a container (10) can be coupled to the latching apparatus (1), **characterised in that** the latching apparatus has at least one locking element (11) which, when a latching apparatus is not coupled to the coupling point (30), is able to assume a position in which the container (10) can be released from the latching facility (1), and, when a latching apparatus is coupled to the coupling point (30), is able to assume a position in which the container (10) cannot be released from the latching facility (1).

2. Latching apparatus (1) according to one of the preceding claims, **characterised in that** the latching apparatus (1) has a movable safety element (3), wherein the position of the safety element (3) determines whether a latching element of the latching apparatus (1) can be moved from the first into the second position, in such a way that the latching element can be locked by the safety element (3).

3. Latching apparatus (1) according to claim 2, **characterised in that** the safety element (3) is arranged in a rotatable manner in the latching apparatus (1), and the twisting of the safety element (3) defines the first and the second position of the latching apparatus (1).

4. Latching apparatus (1) according to claim 2 or 3, **characterised in that** the latching apparatus (1) has a resilient reset element (5) that holds the safety element (3) in a reset position, whereby the first position of the latching apparatus (1) is defined.

5. Latching apparatus (1) according to claim 4, **characterised in that** the resilient reset element (5) is embodied as a torsion spring.

6. Latching apparatus (1) according to one of claims 2 to 5, **characterised in that** the safety element (3) has at least one engagement element (4) for engaging into the processing unit (20).

7. Latching apparatus (1) according to one of claims 2 to 6, **characterised in that** the safety element (3) is embodied in a substantially annular manner, and the at least one engagement element (4) extends essentially perpendicularly to the ring plane.

8. Latching apparatus (1) according to one of the preceding claims, **characterised in that** the latching apparatus (1) has at least one latching element (8) that is locked in a latching position by the safety element (3) when the safety element (3) is situated in the first position.

## Revendications

1. Dispositif de verrouillage (1) comprenant une zone de couplage (9) pour le couplage au point de couplage (30) d'un appareil de cuisine, dans lequel le dispositif de verrouillage (1) comprend un élément de sécurité (3) qui empêche, dans une première position, le couplage du dispositif de verrouillage (1) sur le point de couplage (30) et l'autorise dans une deuxième position, le dispositif de verrouillage (1) pouvant loger une unité de traitement (20) à l'aide d'un outil destiné à traiter le contenu d'un récipient (10) et l'élément de sécurité (3) adopte la première position dans le cas où l'unité de traitement (20) fait défaut et la deuxième positon dans le cas où l'unité de traitement est en place, et un récipient (10) peut être couplé au dispositif de verrouillage (1), **caractérisé en ce que** le dispositif de verrouillage présente au moins un élément d'arrêt (11), lequel peut adopter, quand le dispositif de verrouillage n'est pas couplé au point de couplage (30), une position dans laquelle le récipient (10) peut être enlevé de l'appareillage de verrouillage (1), et peut adopter, quand le dispositif de verrouillage est couplé au point de couplage (30), une position dans laquelle le récipient (10) ne peut être enlevé de l'appareillage de verrouillage (1).

2. Dispositif de verrouillage (1) selon l'une des revendications précédentes, **caractérisé en ce que** le dispositif de verrouillage (1) présente un élément de sécurité (3) mobile, la position de l'élément de sécurité (3) déterminant si un élément de verrouillage du dispositif de verrouillage (1) peut être déplacé de la première à la deuxième position, de façon que l'élément de verrouillage peut être arrêté par l'élément de sécurité (3).

3. Dispositif de verrouillage (1) selon la revendication 2, **caractérisé en ce que** l'élément de sécurité (3) est disposé rotatif dans le dispositif de verrouillage (1) et la rotation de l'élément de sécurité (3) définit la première et la deuxième position du dispositif de verrouillage (1).

4. Dispositif de verrouillage (1) selon la revendication 2 ou 3, **caractérisé en ce que** le dispositif de verrouillage (1) comprend un élément de rappel élastique (5), lequel maintient l'élément de sécurité (3) dans une position de rappel, qui définit la première position du dispositif de verrouillage (1).

5. Dispositif de verrouillage (1) selon la revendication 4, **caractérisé en ce que** l'élément de rappel élastique (5) est réalisé en tant que ressort à torsion.

6. Dispositif de verrouillage (1) selon l'une des revendications 2 à 5, **caractérisé en ce que** l'élément de sécurité (3) présente au moins un élément d'engagement (4) pour engagement dans l'unité de traitement (20).

7. Dispositif de verrouillage (1) selon l'une des revendications 2 à 6, **caractérisé en ce que** l'élément de sécurité (3) est réalisé essentiellement comme un anneau et le au moins un élément d'engagement (4) s'étend essentiellement à la perpendiculaire du niveau de l'anneau.

8. Dispositif de verrouillage (1) selon l'une des revendications précédentes, **caractérisé en ce que** le dispositif de verrouillage (1) comprend au moins un élément de verrouillage (8) arrêté par l'élément de sécurité (3) dans une position de verrouillage quand l'élément de sécurité (3) se trouve dans la première position.
